# EUROPEAN PATENT APPLICATION

(11) **EP 2 105 265 A1**
(43) Date of publication of application: **30.09.2009**
(21) Application number: 07860474.1
(22) Date of filing: 28.12.2007
(51) Int. Cl.: B25J 19/00, B23K 9/12

(54) **INDUSTRIAL ROBOT**

(30) Priority: 09.01.2007 JP 2007001757
(71) Applicant: Kabushiki Kaisha Yaskawa Denki, Kitakyushu-shi, Fukuoka 806-0004 (JP)
(72) Inventor: KAGAWA, Ryuta, Kitakyushu-Shi, 806-0004 Fukuoka (JP); MIYAZONO, Yoshiaki, Kitakyushu-Shi, 806-0004 Fukuoka (JP); IMANAKA, Takayuki, Kitakyushu-Shi, 806-0004 Fukuoka (JP)
(74) Representative: Uchida, Kenji
(86) International application number: PCT/JP2007/075271
(87) International publication number: WO 2008/084737

(57) **Abstract**

An arc welding robot is provided, which is capable of suppressing vibration of an arm without deterioration in durability of a conduit cable while the advantage of preventing interference from occurring of the conventional industrial robot is still provided.

A reinforcement member (10) formed by smoothly bending a plate member and having a U-shaped cross section is attached such that a recessed part of the U shape faces a rotational axis (4th axis) of a first arm (3).

## Description

### Technical Field

The present invention relates to an industrial robot, and more particularly to an arm structure for an arc robot.

### Background Art

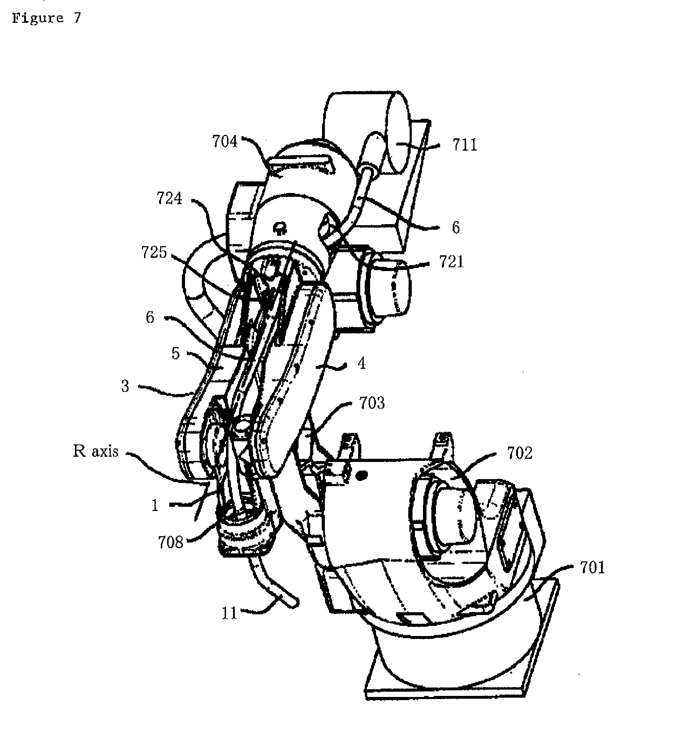

Fig. 7 is a stereogram showing a conventional arc welding robot. A first arm 3 includes two members (first and second members) defining a bi-forked, substantially U shape and extending in parallel to the R-axis. A wrist 1 is arranged between the members 4 and 5 and supported thereby from both sides. A conduit cable 6 inserted into a second arm 704 from the outside through an entrance port 721, and extends to the outside again through a passage port 725 made at a bottom portion 724 of the U shape of the first arm 3. Then, the conduit cable 6 extends through a space between the first and second members 4 and 5 toward the wrist 1. The passage port 725 is an opening around the R-axis. The conduit cable 6 extends from the passage port 725 to the wrist 1 along the R-axis (so that the center of the conduit cable 6 is aligned with the R-axis) (e.g., see Patent Document 1).
Also, a structure is provided, in which a first arm 3 does not have a substantially U shape defined by the first and second members 4 and 5, but only one of the members supports the wrist in a cantilevered manner (e.g., see Patent Document 2).
In the robot with such a structure, a conduit cable is integral with the arm, thereby providing an advantage of preventing the cable from interfering with a robot main body or a peripheral object.
[Patent Document 1] Japanese Patent Laid-Open Publication No. 2003-200376 (pages 4 to 6, Fig. 1)
[Patent Document 2] Japanese Patent Laid-Open Publication No. 2004-306072 (pages 6 to 13, Fig. 1)

### Disclosure of Invention

### Problems to be Solved by the Invention

In the conventional arc welding robot, an originally provided center portion of a first arm is largely cut. Arm rigidity is low, and a wrist at a tip end part may be wobbled. With the wobble (vibration), accuracy of welding may be decreased, and workability may be deteriorated.
The present invention is made to address the problems, and an object of the invention is to provide an arc welding robot capable of suppressing vibration of an arm without deterioration in durability of a conduit cable while the advantage of preventing interference from occurring of the conventional industrial robot is still provided.

### Means for Solving the Problems

To address the problems, the present invention is configured as follows.
The invention according to claim 1 provides an industrial robot. The industrial robot includes a work tool which carries out a predetermined work for a workpiece, a wrist to which the work tool is attached, and an arm which supports the wrist swingably and is rotatable around a rotational axis extending in a longitudinal direction. The arm includes at least first and second members provided in parallel to the longitudinal direction. A cable connected to the work tool extends through a space between the first and second members. The industrial robot is characterized by comprising a third member which fixes the first and second members to each other.
In the invention according to claim 2, the first member has a larger length than that of the second member, and the wrist is provided at a tip end of the first member.
In the invention according to claim 3, the first member has a length equivalent to that of the second member, and the wrist is swingably supported by tip ends of the first and second members.
In the invention according to claim 4, the predetermined work is welding, and the work tool is a welding torch.
In the invention according to claim 5, the predetermined work is painting, and the work tool is a paint spray gun.
In the invention according to claim 6, the predetermined work is sealing, and the work tool is a sealing nozzle.
In the invention according to claim 7, the predetermined work is grinding, and the work tool is a grinding tool.
In the invention according to claim 8, the predetermined work is handling, and the work tool is a mechanical hand.
In the invention according to claim 9, the third member is provided such that a longitudinal direction of the third member is perpendicular to the longitudinal direction of the arm.
In the invention according to claim 10, the third member is provided at an upper side of the arm.
In the invention according to claim 11, the third member is provided at a lower side of the arm.
In the invention according to claim 12, the third member is provided at an intermediate position in the longitudinal direction of the arm.
In the invention according to claim 13, the third member is provided at a tip end position in the longitudinal direction of the arm.
In the invention according to claim 14, the third member has an arch shape formed by bending a plate member in the longitudinal direction.
In the invention according to claim 15, the third member has an arch shape formed by bending a channel member in the longitudinal direction, the channel member having an angular C-shaped cross section.
In the invention according to claim 16, the third member has an arch shape formed by bending a substantially cylindrical member in the longitudinal direction.
In the invention according to claim 17, the substantially cylindrical member is hollow.
In the invention according to claim 18, the third member is attached such that a recessed part of the arch shape faces the rotational axis of the arm.
In the invention according to claim 19, a lubricant member is provided at the recessed part of the arch shape.
In the invention according to claim 20, a lubricant member is provided on a surface of the third member.
In the invention according to claim 21, the lubricant member is solid lubricant resin.
In the invention according to claim 22, the solid lubricant resin is fluorocarbon compound resin.
In the invention according to claim 23, the arch shape has a larger bend radius than a radius of the cable.
In the invention according to claim 24, an edge at the recessed part of the arch shape is chamfered.
In the invention according to claim 25, the third member is fixed by welding.
In the invention according to claim 26, the third member is fixed by screwing.
In the invention according to claim 27, a plurality of the third members is provided.

### Advantages

With the invention according to any of claims 1, 2, 3, and 9 to 15, vibration of the arm can be suppressed without deterioration in durability of a conduit cable while the advantage of preventing interference from occurring of the conventional industrial robot is still provided.
Also, with the invention according to any of claims 4 to 8, the invention can be applied to various types of works.
Also, with the invention according to claim 16, chamfering is not necessary, and a conduit cable would not be damaged.
Also, with the invention according to claim 17, reduction in weight can be promoted.
Also, with the invention according to claim 18, contact between the reinforcement member and the conduit cable can be prevented maximally.
Also, with the invention according to any of claims 19 to 22, and 24, even when the reinforcement member contacts the conduit cable, the conduit cable can be prevented from being damaged.
Also, with the invention according to claim 23, the reinforcement member would not pinch the conduit cable, and hence, the reinforcement member would not damage the conduit cable.
Also, with the invention according to claim 25, rigidity of the arm is increased, and a vibration suppression function is effectively provided.
Also, with the invention according to claim 26, since the reinforcement member is easily removed, maintenance can be easily carried out.
With the invention according to claim 27, the rigidity of the arm can be further increased.

### Brief Description of Drawings

[Fig. 1] Fig. 1 is a top view showing an arm of an arc welding robot according to a first embodiment of the invention.
[Fig. 2] Fig. 2 is a side view showing the arm of the arc welding robot according to the first embodiment of the invention.
[Fig. 3] Fig. 3 is a front view showing the arm of the arc welding robot according to the first embodiment of the invention.
[Fig. 4] Fig. 4 is an explanatory view showing deflection of a tip end of the arm.
[Fig. 5] Fig. 5 is a top view showing an arm of an arc welding robot according to a modification of the first embodiment of the invention.
[Fig. 6] Fig. 6 includes perspective views ((b), (c)) showing reinforcement members according to a second embodiment of the invention.
[Fig. 7] Fig. 7 is a perspective view showing a conventional arc welding robot.

### Reference Numerals

- 1: wrist
- 1a: second base portion
- 1b: third member
- 1c: fourth member
- 2: flange
- 3: first arm
- 4: first member
- 5: second member
- 6: conduit cable
- 7: cable support
- 8: first base portion
- 10: reinforcement member (third member)
- 11: welding torch (work tool)
- 701: base
- 702: swing base
- 703: lower arm
- 704: second arm
- 708: rotary member
- 711: wire feed device
- 721: entrance port
- 724: bottom portion
- 725: passage port

### Best Modes for Carrying Out the Invention

Embodiments of the present invention will be described below with reference to the figures.

### [First Embodiment]

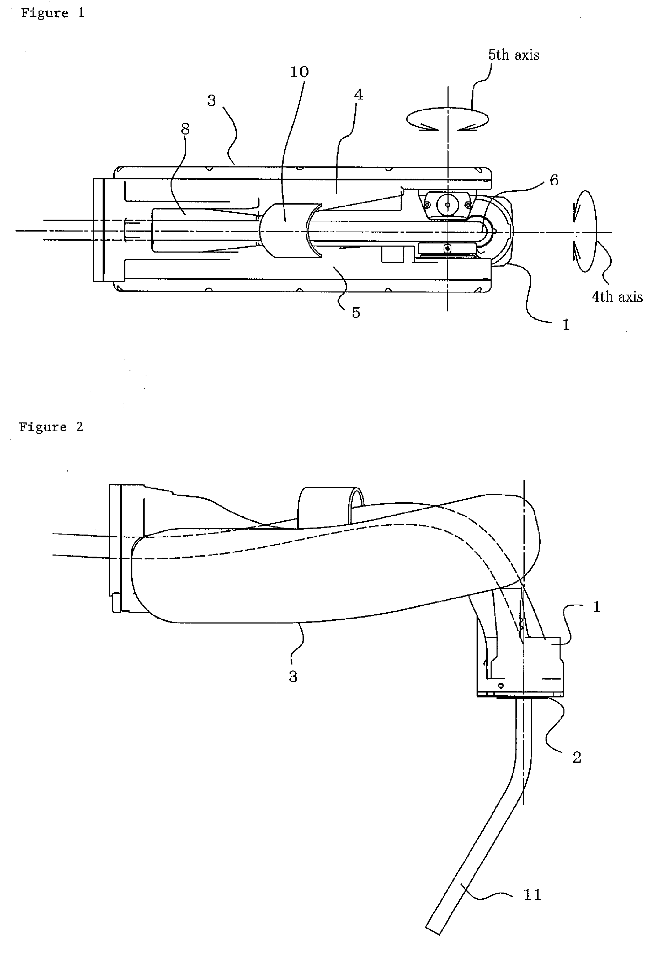

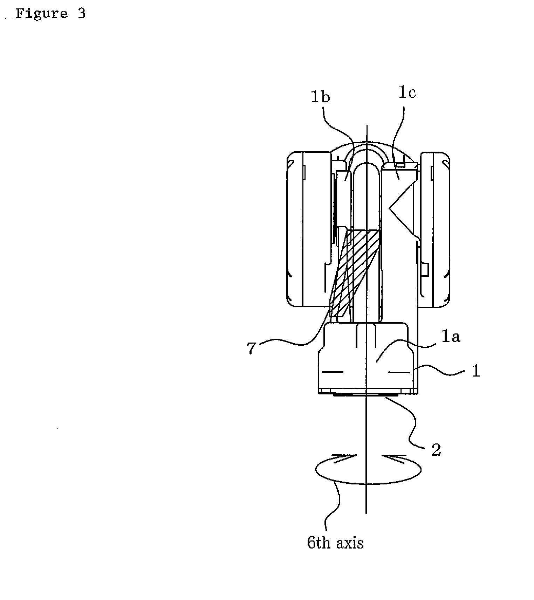

Fig. 1 is a top view showing an arm and a wrist of the invention. Figs. 2 and 3 are side and front views of the arm and the wrist.
Referring to the figures, reference numeral 3 denotes a first arm, which is supported rotatably around a 4th axis. The first arm 3 includes at least a first base portion 8, a first member 4, and a second member 5. Here, the first base portion 8 is provided at a side of the first arm 3 farthest from a tip end of the first arm 3, and has a hollow part into which a conduit cable (described later) is inserted. The first member 4 and the second member 5 extend in parallel to each other from the first base portion 8 along the 4th axis.
In particular, when the first arm 3 is viewed from its upper surface (Fig. 1), a side thereof farthest from the tip end is closed with the first base portion 8, and a side nearest to the tip end (a side nearest to a wrist support portion) is open. The first base portion 8 and the first and second members 4 and 5 form a bi-forked, substantially U shape.
Reference numeral 1 denotes a wrist provided at the tip end of the first arm 3. The wrist 1 supported rotatably around a 5th axis includes two third and fourth members 1b and 1c extending from a second base portion 1a along a 6th axis, and these components form a bi-forked, substantially U shape in a similar manner to the first arm.
Reference numeral 2 denotes a flange provided at a tip end of the second base portion 1a. The flange 2 rotates around the 6th axis, and has a hollow part at its rotation center. In addition, a welding torch 11 (work tool) is attached to the flange 2.
Reference numeral 6 denotes a conduit cable connected to the welding torch 11. The conduit cable 6 extends through the hollow part of the first base portion 8 of the first arm 3, extends to a space between the first and second members 4 and 5, extends through a space between the third and fourth members 1b and 1c of the wrist 1, and then extends through the hollow part of the flange 2. The conduit cable 6 supplies an electric signal necessary for welding work, and also supplies a material. Accordingly, the welding work can be carried out.
Reference numeral 7 denotes a cable support fixed to the third member 1b. The cable support 7 is a plate member for closing a gap between the third and fourth members 1b and 1c. During operation of the robot, since the cable conduit makes various types of motions, the cable support 7 functions as a constraint piece that prevents the conduit cable 6 from protruding from the gap between the third and fourth members 1b and 1c.

Reference numeral 10 denotes a reinforcement member (third member) provided at an upper side of the first and second members 4 and 5. The reinforcement member 10 has an arch shape formed by smoothly bending a plate member. Referring to Figs. 1 to 3, the reinforcement member 10 is attached so as to fix the first and second members 4 and 5 to each other such that a recessed part of the arch shape faces a rotational axis (the 4th axis) of the first arm 3. Here, the arch shape has a larger bend radius than a radius of the cable. Though not illustrated, solid lubricant resin (a lubricant member) such as fluorocarbon composite resin is provided at the recessed part, and an edge of a recessed surface is largely chamfered. The reinforcement member is attached by welding.

The present invention differs from Patent Document 1 in that the reinforcement member 10 is provided.

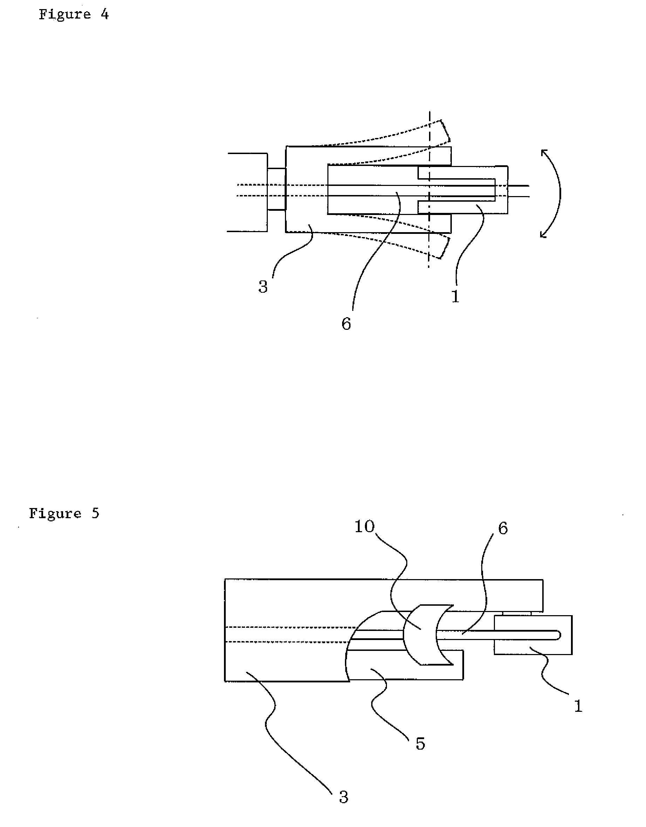

If the reinforcement member 10 is not provided, rigidity of the arm is low, and the tip end (the first and second members 4 and 5) of the first arm 3 is deflected as shown in Fig. 4. Hence, the wrist 1 at the tip end is vibrated, resulting in that the welding torch is vibrated.
However, with the reinforcement member 10 of the present invention, the decrease in rigidity can be prevented. Further, since the reinforcement member 10 has the arch shape, contact of the conduit cable 6 can be prevented maximally.
Still further, since the bend radius of the arch shape is larger than the radius of the cable, the reinforcement member 10 would not pinch and damage the conduit cable 6. Yet further, since the recessed part is provided with the solid lubricant resin and the edge is chamfered, even when the conduit cable contacts the recessed part, the conduit cable 6 would not be damaged. Also, large chamfering at the edge attains an advantage similar to the above.

In the above-described embodiment, the reinforcement member 10 is provided at the upper side of the first and second members 4 and 5. However, reinforcement members 10 may be provided at both upper and lower sides. Also, the reinforcement member 10 has the arch shape. However, the reinforcement member 10 does not have to have the arch shape and may be merely a plate member. Even with the configuration, the vibration suppression effect can be provided. Alternatively, the reinforcement member 10 may be a channel member with an angular C-shaped cross section instead of the plate member. Accordingly, the rigidity can be further increased and the vibration suppression effect can be increased although the reinforcement member does not have the arch shape.

In the above-described embodiment, the first arm has a length equivalent to that of the second arm in the longitudinal direction. However, in the case of the robot in which the arm (corresponding to the first member 4) supports the wrist in a cantilevered manner as disclosed in Patent Document 2, the second member of the above-described embodiment may be provided in parallel to the arm, thereby preventing a member of the arm from vibrating (Fig. 5). In this case, the second member may have a length capable of fixing the reinforcement member. In particular, the length of the second member is smaller than the length of the first member, and an end of the reinforcement member is fixed to the tip end of the second member.

With this embodiment, the vibration of the welding torch can be suppressed without the conduit cable being damaged while the advantage of preventing interference from occurring of the conventional robot is still provided.

### [Second Embodiment]

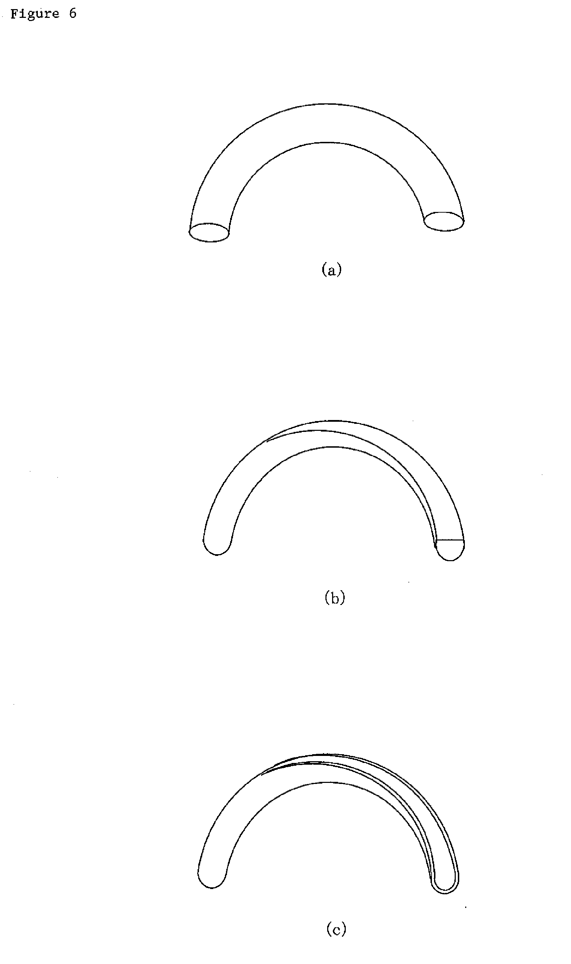

In this embodiment, referring to Fig. 6(a), the reinforcement member 10 of the first embodiment is a substantially cylindrical member having a substantially cylindrical shape. The surface of the cylindrical member is provided with a lubricant member in a similar manner to the first embodiment.
With this embodiment, the similar advantage to that of the first embodiment can be provided. Also, chamfering is not necessary. If the cylindrical member is a hollow cylindrical member (pipe shape), reduction in weight can be promoted.
Alternatively, a member formed by cutting a cylindrical member or a pipe shape in a longitudinal direction as shown in Fig. 6(b) or 6(c) may be used. The substantially cylindrical member involves such a member, and may have any shape as long as the shape at the recessed part of the arch shape is cylindrical.

### [Third Embodiment]

In this embodiment, the reinforcement member 10 is attached by screwing instead of welding.
With this embodiment, the vibration suppression effect is decreased as compared with the case using welding according to the first embodiment. However, the reinforcement member may be easily attached or detached. Thus, the attachment or detachment of the reinforcement member would not disturb a maintenance operation of the conduit cable and the like.
Since the attachment relies on screwing, reinforcement members 10 may be easily attached to a plurality of positions to increase the vibration suppression effect, although screwing provides a smaller effect as compared with the welding.

In the present invention, the work tool is not limited to the welding torch, and various types of working tools may be applied. The work tool may be any type as long as the work tool is used for a predetermined work carried out by an industrial robot. The work tool may be, for example, a paint spray gun for painting, a sealing nozzle for sealing, a grinding tool for grinding, or a mechanical hand for handling.
Furthermore, even when the structure of an arm nearer to a base than the first arm is desirably modified, the modification would not disturb implementation of the invention.

## Claims

1. An industrial robot including
a work tool which carries out a predetermined work for a workpiece, a wrist to which the work tool is attached, and an arm which supports the wrist swingably and is rotatable around a rotational axis extending in a longitudinal direction,
wherein the arm includes at least first and second members provided in parallel to the longitudinal direction, and wherein a cable connected to the work tool extends through a space between the first and second members, the industrial robot **characterized by** comprising
a third member which fixes the first and second members to each other.

2. The industrial robot according to claim 1,
wherein the first member has a larger length than that of the second member in the longitudinal direction of the arm, and
wherein the wrist is provided at a tip end of the first member.

3. The industrial robot according to claim 1,
wherein the first member has a length equivalent to that of the second member, and
wherein the wrist is swingably supported by tip ends of the first and second members.

4. The industrial robot according to claim 2 or 3,
wherein the predetermined work is welding, and
wherein the work tool is a welding torch.

5. The industrial robot according to claim 2 or 3,
wherein the predetermined work is painting, and
wherein the work tool is a paint spray gun.

6. The industrial robot according to claim 2 or 3,
wherein the predetermined work is sealing, and
wherein the work tool is a sealing nozzle.

7. The industrial robot according to claim 2 or 3,
wherein the predetermined work is grinding, and
wherein the work tool is a grinding tool.

8. The industrial robot according to claim 2 or 3,
wherein the predetermined work is handling, and
wherein the work tool is a mechanical hand.

9. The industrial robot according to claim 2 or 3, wherein the third member is provided such that a longitudinal direction of the third member is perpendicular to the longitudinal direction of the arm.

10. The industrial robot according to claim 2 or 3,
wherein the third member is provided at an upper side of the arm.

11. The industrial robot according to claim 2 or 3,
wherein the third member is provided at a lower side of the arm.

12. The industrial robot according to claim 2 or 3,
wherein the third member is provided at an intermediate position in the longitudinal direction of the arm.

13. The industrial robot according to claim 2 or 3,
wherein the third member is provided at a tip end position in the longitudinal direction of the arm.

14. The industrial robot according to claim 2 or 3,
wherein the third member has an arch shape formed by bending a plate member in the longitudinal direction.

15. The industrial robot according to claim 2 or 3,
wherein the third member has an arch shape formed by bending a channel member in the longitudinal direction, the channel member having an angular C-shaped cross section.

16. The industrial robot according to claim 2 or 3,
wherein the third member has an arch shape formed by bending a substantially cylindrical member in the longitudinal direction.

17. The industrial robot according to claim 16, wherein the substantially cylindrical member is hollow.

18. The industrial robot according to claim 14, wherein the third member is attached such that a recessed part of the arch shape faces the rotational axis of the arm.

19. The industrial robot according to claim 18, wherein a lubricant member is provided at the recessed part of the arch shape.

20. The industrial robot according to claim 16, wherein a lubricant member is provided on a surface of the third member.

21. The industrial robot according to claim 19, wherein the lubricant member is solid lubricant resin.

22. The industrial robot according to claim 21, wherein the solid lubricant resin is fluorocarbon compound resin.

23. The industrial robot according to claim 14, wherein the arch shape has a larger bend radius than a radius of the cable.

24. The industrial robot according to claim 14, wherein an edge at the recessed part of the arch shape is chamfered.

25. The industrial robot according to claim 2 or 3,
wherein the third member is fixed by welding.

26. The industrial robot according to claim 2 or 3,
wherein the third member is fixed by screwing.

27. The industrial robot according to claim 26, wherein a plurality of the third members is provided.
